# EUROPEAN PATENT SPECIFICATION

(11) **EP 1 787 270 B1**
(45) Date of publication and mention of the grant of the patent: **24.12.2008**
(21) Application number: 05794455.5
(22) Date of filing: 20.10.2005
(51) Int. Cl.: G08B 29/16

(54) **MONITORING SYSTEM**
ÜBERWACHUNGSSYSTEM
SYSTEME DE SURVEILLANCE

(30) Priority: 18.01.2005 US 39648
(43) Date of publication of application: 23.05.2007
(73) Proprietor: Intergrated Security Manufacturing Limited, Crawley West Sussex RH10 9FZ (GB)
(72) Inventor: JENKINS, David John, Felbridge West Sussex RH19 2QE (GB)
(74) Representative: Kensett, John Hinton
(86) International application number: PCT/GB2005/004050
(87) International publication number: WO 2006/077359

(56) References cited:
- EP-A- 0 932 090
- EP-A- 1 484 894
- WO-A-20/04012434
- US-A1- 2004 150 520
- US-A1- 2004 153 709
- US-A1- 2004 236 869
- PATENT ABSTRACTS OF JAPAN vol. 1997, no. 03, 31 March 1997 (1997-03-31) & JP 08 316955 A (MITSUBISHI SOGO KENKYUSHO:KK), 29 November 1996 (1996-11-29)

## Description

### Background of the Invention

This invention relates to a monitoring system. In particular, but not exclusively, it relates to a system for monitoring activity over a distributed environment such as a workplace, residential or study environment and most preferably the invention relates to the monitoring of a secure environment such as a prison or other secure environment.

A secure environment such as a prison will generally comprise one or a plurality of buildings, each of which has several rooms and corridors and which will be monitored by various types of equipment, including CCTV cameras, fire sensors, smoke sensors, access control apparatus, pagers and other electronic surveillance and/or monitoring equipment. The system will also comprise viewing means for selectively viewing outputs from these sensors or other monitoring or surveillance systems and computer equipment for controlling and analysing all the data to present it meaningfully to a user.

In a typical such environment, a server will be used as the central control and surveillance hub. Often one, or more usually several, client computers, such as personal computers (PCs) may also be distributed around the network. Often the computers and server will be connected via a computer network such as an IP/TCP, Ethernet or wireless network. Such systems can work well but are susceptible to failure of components and, in particular, to failure of the server or to a network failure causing access to the server to be restricted or blocked. These problems may be minimised by the use of duplicate servers or by using technology such as RAID (redundant array of independent discs).

These can increase costs, however, and do not fully solve the problems, particularly if either network failure or physical conditions such as fire, prevent access to the or each dedicated server on the system, in which case RAID arrays would not solve the problem. WO 2004/012434 discloses a remote monitoring system with client machines and remote servers.

The present invention arose in an attempt to provide an improved monitoring system.

### Brief Summary of the Invention

According to the present invention there is provided a monitoring system comprising a network having at least two computers, and one or more condition sensing and or monitoring devices, the computers being arranged to enable any one of the computers to act as a server at any time and for all the other computers to act as clients and to become the server if the first server becomes unable to act as a server; to enable the server to connect to the one or more condition sensing and/or monitoring devices and to the clients; and to enable users to perform actions on client machines that affect the one or more condition sensing and/or monitoring devices, wherein the actions performed by the clients are passed to the one or more condition sensing and/or monitoring devices through the server.

### Summary of the Drawings

Embodiments of the invention will now be described, by way of example only, with reference to the accompanying drawings, in which:
Figure 1 shows a monitoring and surveillance system for a secure environment;
Figure 2 shows part of a control system; and
Figure 3 is a flowchart illustrating a migrating server technique.

### Detailed Description of Embodiments of the Invention

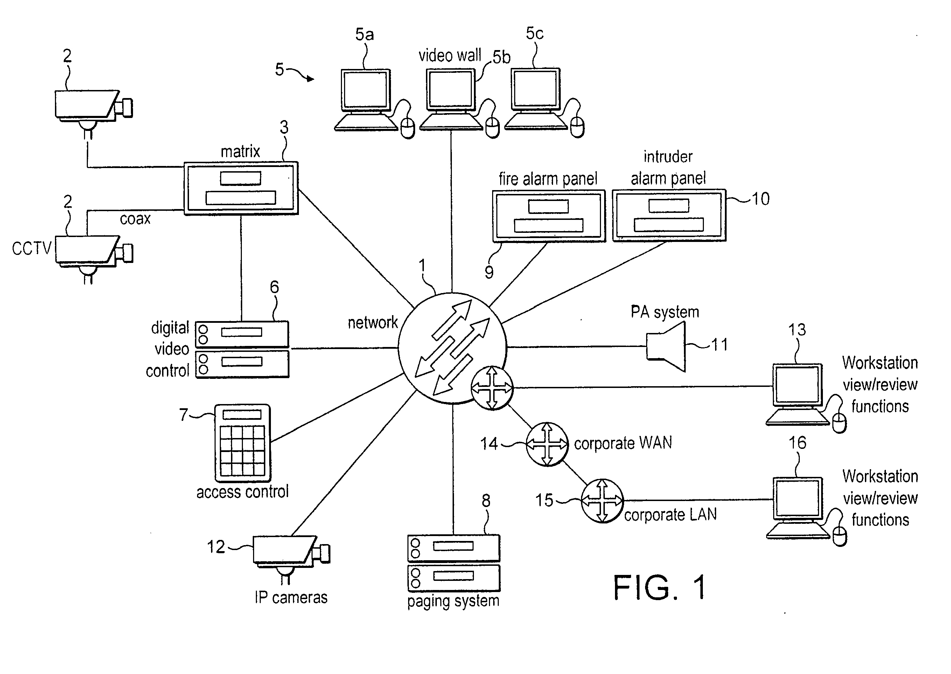

Referring to Figure 1, a monitoring and/or surveillance system for use in a secure environment such as a prison is shown. The system comprises a plurality of sensors, surveillance devices and other types of equipment connected via a network to a control system, shown generally as network 1.

The system shown is by way of example only and many different types of configuration may be used but in the one shown in Figure 1, the system comprises a number of closed circuit television cameras (CCTVs) 2 connected to a camera matrix 3. A digital video control apparatus 4 is connected to this and the network is such that it can control both the movement, scanning and imaging of the camera. Images from the cameras can be viewed in real time, or as recorded video, on a video wall 5 which generally will comprise a plurality of display screens 5a, 5b and 5c or may instead comprise just a single display screen. The TV cameras may be analogue or digital and images may be viewed from them in real time, or delayed still or moving video images may be stored. The apparatus may also include access control means 7, such as keypads, finger print readers, retune scanners and various control means, locking mechanisms, etc at locations through the secure area, such as doors, cells, corridors, etc.

A paging system 8 is also connected to the network and in a prison environment the individual prison officers may carry portable pagers. The paging system may also include means for location sensing and means for detecting if an officer is in a desired or undesired location, for example, or may be in trouble because he has been at particular location for longer than was envisaged. The location sensing system may use triangulation techniques e.g. using a system of locally mounted transmitters/receivers or other methods, using local or remote devices, or positioning systems such as GPS.

The system may also advantageously have integrated within it fire alarm and intruder alarm systems and a fire alarm panel 9 and intruder alarm panel 10 are shown.

An intercom system, such as a PA system 11 with speakers and perhaps also microphones to allow two-way communication is also included.

In addition to the CCTV cameras, the figure also shows an IP (Internet Protocol) camera 12 which may be remotely located and perhaps connected over a wide area network such as the Internet, communicating by Internet Protocol standards for example. The figure further shows the first work station 13 with viewing and reviewing function for giving an overall view of the situation.

The monitoring and surveillance apparatus shown may form part of a wider corporate wide area network (1) 14 and of course can be at a physically separate location. A further corporate LAN 15 may include one or more workstations 16 which can also be used to view data from the monitoring and surveillance systems.

The surveillance system represents a plurality of components which are connected together in the network. This may include some items which are connected together by a wired bus or other types of networking, such as Ethernet networks, and of course may include wireless devices connected via wireless communication systems such as WI-FI (TM), Optical Systems, Bluetooth (TM) or other wireless communication methods.

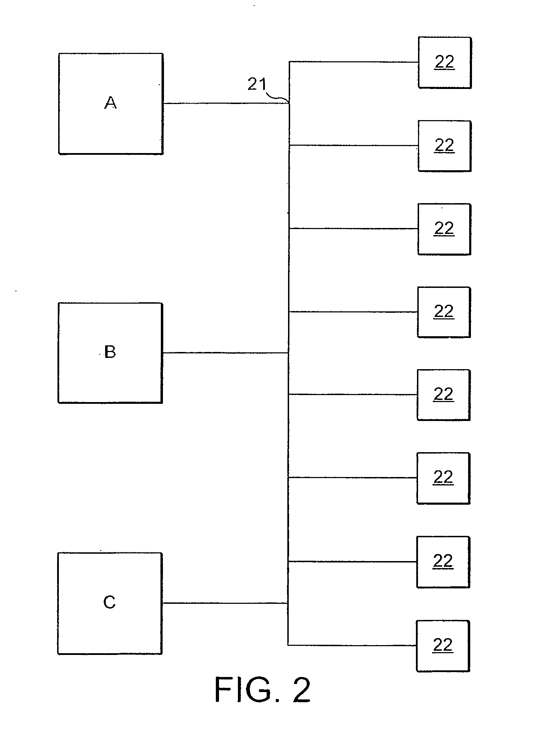

Figure 2 shows schematically part of the control and monitoring apparatus and this comprises three computers respectively marked computer A, computer B and computer C. Each of these computers are connected to the network bus 21 and a plurality of sensing, surveillance or monitoring equipment 22 is also connected to the bus. The bus may of course be an Ethernet connection or may represent more generally a network such as a network running IP/TCP internet protocols or other packet or non-packet based protocols.

The units 22 may be a monitor, surveillance or control equipment, non-limiting examples of which are shown in the example of Figure 1.

Previously proposed monitoring system utilised one of the computers, say computer A for example, as a server. The other computers could be used to view and monitor the environment and may be able to control local devices connected to them but were not acting in a server capacity.

In the present invention, at one time, one of the computers A, B or C, say computer A, will act as a server and the remaining computers B and C will act as client machines. However, if for any reason computer A cannot act as a server, either through a problem at the computer itself or through a network problem, or an external environmental problem, then the server function 'migrates' to one or the other computers B and C. Note that although three computers are shown in figure, in practice there may be any number of computers or just two computers, in the system. All or a selected group of these computers may become servers if necessary.

The system embodying the present invention utilises a hierarchial list of machines (computers) that can become servers.

A more detailed explanation follows, with reference to the drawings:

A list of IP addresses for all relevant machines that can become a server is stored on each computer . The order of the list identifies the order in which machines should become a server. For example, if the list contains the IP addresses for machine A, machine B and machine C - in that order - then if machine A is active it will be the server. If machine A is inactive and machine B is active, then machine B will be the server. If only machine C is active then that will be the server. Each computer maintains a list of which possible server machines are currently active. If machine A is active then a flag for server machine 1 will be set - and similarly for all other listed server machines. Therefore if server machine 1 is flagged as active the PC that is server machine 1 will become a server and all other machine will connect to it. If server machine 1 becomes inactive at any time then all machines will switch to using the next highest active server machine.

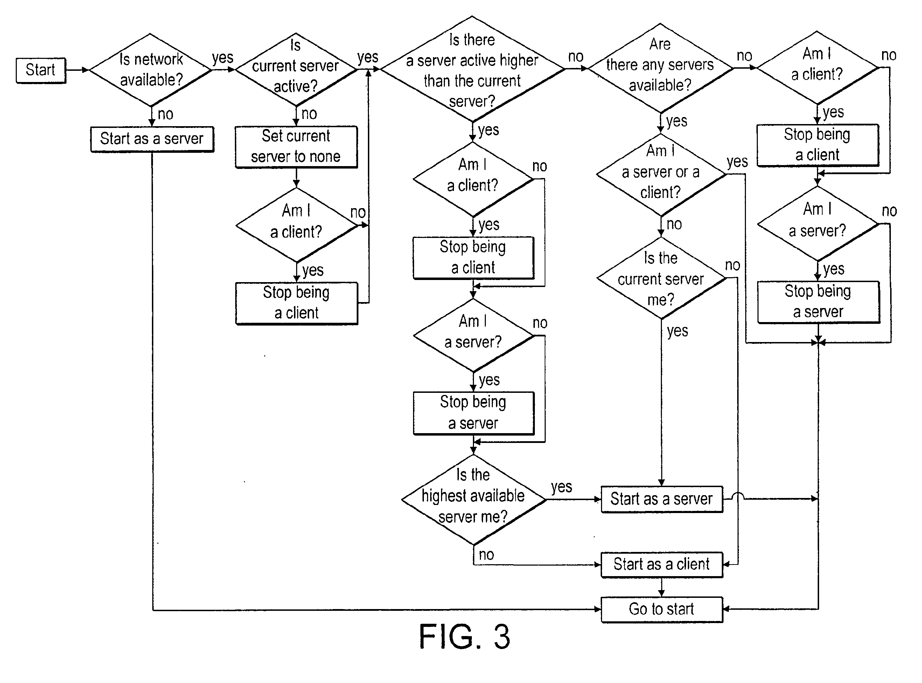

A single software application can create any number of 'threads'. A 'thread' is a section of code which, to all intents and purposes, runs simultaneously to all other threads within the application. Code within a thread runs concurrently in a logical manner. The migrating server networking according to a preferred embodiment uses three threads to achieve the above functionality:
1. The first networking thread continuously loops through the list of servers and checks to see if the system is still active on each machine. To do this it uses a 'sockets' code to call up the remote computer and ask for a response. A sockets code is an object that connects an application to a network protocol. For example a program can send or receive TCP/IP messages by opening a socket and reading and writing data to and from the socket. The sockets code is essentially Microsoft ™ sockets code, but the timing is preferably such that the code *quickly* reports if the machine replied or not (within a time less than 30 seconds) - a failure to respond could otherwise take over 30 seconds. As each machine is checked the result is stored in a thread-safe area of data indicating whether that machine responded - and therefore is available - or not.
2. A second thread constantly listens for incoming connection requests. When another PC attempts to connect, the connection is accepted. This indicates to the other PC that this machine is active. The connection is then closed and the thread waits for other connection attempts.
3. A final thread deals with making the machine operate as a server or client, depending on the status flags obtained from the first thread. The flow chart of Figure 3 shows how this works. The flow chart makes use of two sections of data - the list of currently active servers (maintained by thread 1), and a record of which machine is running as a server now (current server in the flow chat). If the machine that is running as a server now is flagged as inactive then the server machine will change. Similarly if the currently running server is still flagged as active, but a server higher in the list becomes available, then the server machine will change.

### Server Operation

The server machine is simply a nominated computer that listens for incoming network connections from other machines. When the server machine hears a connection request from another computer it verifies and accepts the connection and adds that connection to the list of clients that are connected to it.

When data is required to be sent to all networked machines the data is simply sent out to all machines in the server's current list of clients.

When data is received from a connected client machine it is first sent out to all other client machines and then processed by the server.

When a machine first becomes a server it will open up connections to all external hardware and start communicating with them according to their specific protocols. When an event happens on any of the external hardware that is important to the system, e.g. the hardware shown in Figure 1, this event is sent to all connected clients. When the user performs an action that affects any of the external hardware this event is sent directly to the hardware using the relevant protocol.

### Client Operation

A machine becomes a client when it successfully connects to the server machine over the network. To become a client a connection request is sent to the server. When the connection request is accepted by the server the client machine stores the connection as its current server.

When data is required to be sent to all networked machines the data is only sent to the server. The server will then forward the data on to all other clients.

When data is received from the server the client machine will simply process it.

A client machine will not attempt to open up connections to any external hardware. If any connections to hardware are open then they will be shut down, enabling the server to gain access to them. When an event happens on any of the external hardware the server machine will notify the client machine. When the user performs an action on the client machine that affects any of the external hardware, the event is sent to the server machine which will then pass it on to the hardware using the relevant protocol.

The 'migrating-server' routine is illustrated in the flow chart of Figure 3 and the following table:

### Migrating Server Example

**PSM*x*** = Possible Server Machine, x = priority number of server.

List of possible servers, configured identically on each machine:
- IP Address 192.168.0.10 (Machine A - **PSM1**)
- IP Address 192.168.0.15 (Machine B - **PSM2**)
- IP Address 192.168.0.20 (Machine C - **PSM3**)

**TABLE A**

| Machine A | Machine B | Machine C |
|---|---|---|
| *Inactive* | *Active* | *Inactive* |
| Thread 1 - Not running. | Thread 1: | Thread I - Not running. |
| | • **PSM1** - Inactive. | |
| | • **PSM2** - Active (me). | |
| | • **PSM3** - Inactive. | |
| Thread 2 - Not running. | Thread 2: Listens for incoming connections. | Thread 2 - Not running. |
| | • No attempts made. | |
| Thread 3 - Not running | Thread 3: Highest available server is **PSM2.** | Thread 3 - Not running. |
| | • Am I **PSM2?** Yes. | |
| | • Am I a server? No - become a server. | |

| *Inactive* | *Active* | *Active* |
|---|---|---|
| Thread 1 - Not running. | Thread 1: | Thread 1: |
| | • **PSM1** - Inactive. | • **PSM1** - Inactive. |
| | • **PSM2** - Active (me). | • **PSM2** - Active. |
| | • **PSM3** - Active. | • **PSM3** - Active (me). |
| Thread 2 - Not running. | Thread 2: Listens for incoming connections. | Thread 2: Listens for incoming connections. |
| | • Connection request from Machine C. | • Connection request from Machine B. |
| Thread 3 - Not running. | Tread 3: Highest available server is **PSM2.** | Thread 3: Highest available server is **PSM2.** |
| | • Am I **PSM2?** Yes - check I'm a server. | • Am I **PSM2?** No - check I'm a client. |
| | • Am I a server? Yes - do nothing. | • Am I a server? No - do nothing. |
| | • Am I a client? No - do nothing. | • Am I a client? No - become a client of PSM2. |

| *Active* | *Active* | *Active* |
|---|---|---|
| Thread 1: | Thread 1: | Thread 1: |
| • **PSM1** - Active (me). | • **PSM1** - Active. | • **PSM1** - Active. |
| • **PSM2** - Active. | • **PSM2** - Active (me). | • **PSM2** - Active. |
| • **PSM3** - Active. | • **PSM3** - Active. | • **PSM3** - Active (me). |
| Thread 2: Listens for incoming connections. | Thread 2: Listens for incoming connections. | Thread 2: Listens for incoming connections. |
| • Connection request from Machine B. | • Connection request from Machine A. | • Connection request from Machine A. |
| • Connection request from Machine C. | • Connection request from Machine C. | • Connection request from Machine B. |
| Thread 3: Highest available server is **PSM1.** | Thread 3: Highest available server is **PSM1.** | Thread 3: Highest available server is **PSM1.** |
| • Am I **PSM1**? Yes. | • Am I **PSM1**? No. | • Am I **PSM1**? No - |
| • Am I a server? No - | • Am I a server? Yes - | check I'm a client. |
| become a server. | stop being a server. | • Am I a server? No - |
| | • Am I a client? No - | do nothing. |
| | become a client of | • Am I a client? Yes. |
| | **PSM1.** | • Is my current server **PSM1**? No - stop being a client of **PSM2** and become a client of **PSM1**. |

| | | |
|---|---|---|
| Note that in this specification the term computer may extend to any apparatus having a processor. The term prison used herein may mean a dedicated prison facility or any facility used or usable to detain persons. | | |

## Claims

1. A monitoring system comprising a network having at least two computers (A, B, C), and one or more condition sensing and or monitoring devices (7 - 16), the computers being arranged to enable any one of the computers to act as a server at any time and for all the other computers to act as clients and to become the server if the first server becomes unable to act as a server; to enable the server to connect to the one or more condition sensing and/or monitoring devices and to the clients; and to enable users to perform actions on client machines that affect the one or more condition sensing and/or monitoring devices, wherein the actions performed by the clients are passed to the one or more condition sensing and/or monitoring devices through the server.

2. A monitoring system as claimed in claim 1 including a hierarchical list of the priority by which the computers can become the server.

3. A monitoring system as claimed in claim 2 wherein the hierarchical list contains the IP addresses of each computer.

4. A monitoring system as claimed in claim 1 wherein a priority of threads are run on each computer, the threads being used to achieve states in which one computer acts as a server and the remainder of the computers act as clients.

5. A monitoring system as claimed in claim 4 when each computer includes a list of the addresses of each other computer and comprising a first thread acting to check whether each other computer is active.

6. A monitoring system as claimed in claim 5 wherein the first thread uses a sockets code.

7. A monitoring system as claimed in claim 4 comprising a second thread arranged to listen for connection requests from other computers.

8. A monitoring system as claimed in claim 7 wherein the second thread monitors attempts to connect with the computer on which the thread is running from another computer and acceptance of said connection, thereby to indicate to the computer on which the thread is running that the computer attempting to connect with that computer is active.

9. The monitoring system as claimed in claim 5 comprising a third thread usable to select whether a computer operates as a server or client.

10. A monitoring system as claimed in claim 9 wherein the first thread is used to identify if a contacted computer replies or not and sets a status flag accordingly and the third thread uses the status flag at least partially as a basis to determine whether the machine it is running on is to act as a server or client.

11. A monitoring system as claimed in claim 10 wherein in the third thread uses a list of currently active servers and a record of which machine is currently acting as server to determine whether the computer on which the thread is running should now become a server if the computer currently running as a server is indicated as being inactive.

12. A monitoring system as claimed in claim 11 wherein if the currently running server is considered to be active but a further computer which is higher in the hierarchial list of computers becomes available, then that further computer becomes the server.

13. A monitoring system as claimed in claim 1 wherein when a computer first becomes a server it opens connections to the other computers and devices on the network and begins communicating with them according to their specific protocols.

14. A monitoring system as claimed in any of Claims 1 to 13, used in a prison, the condition sensing and monitoring devices including surveillance devices.

15. A monitoring system as claimed in any of Claim 1 to 13, used in a prison environment, the condition-sensing and monitoring device including surveillance devices.

## Patentansprüche

1. Überwachungssystem, das ein Netzwerk mit wenigstens zwei Computern (A, B, C) und einem oder mehreren Zustandsmelde- und/oder Überwachungsgeräten (7 - 16) umfasst, wobei die Computer eingerichtet sind einem beliebigen der Computer zu ermöglichen jederzeit als ein Server zu fungieren und allen der anderen Computer zu ermöglichen als Clients zu fungieren und der Server zu werden, falls der erste Server unfähig wird als ein Server zu fungieren; dem Server zu ermöglichen sich mit dem einen oder mehreren Zustandsmelde- und/oder Überwachungsgeräten und den Clients zu verbinden; und Nutzern zu ermöglichen Aktionen auf Client-Maschinen auszuführen, die ein oder mehrere Zustandsmelde- und/oder Überwachungsgeräte beeinflussen, wobei die von den Clients ausgeführten Aktionen durch den Server an das eine oder mehrere Zustandsmelde- und/oder Überwachungsgeräte weitergeleitet werden.

2. Überwachungssystem nach Anspruch 1, das eine hierarchische Liste der Priorität umfasst durch welche die Computer zum Server werden können.

3. Überwachungssystem nach Anspruch 2, wobei die hierarchische Liste die IP-Adressen jedes Computers enthält.

4. Überwachungssystem nach Anspruch 1, wobei man eine Priorität von Threads auf jedem Computer laufen lässt, die Threads verwendet werden Zustände zu erzielen, in denen ein Computer als ein Server fungiert und die restlichen Computer als Clients fungieren.

5. Überwachungssystem nach Anspruch 4, wobei jeder Computer eine Liste der Adressen jedes anderen Computers einschließt und einen ersten Thread umfasst, dessen Funktion ist zu prüfen, ob jeder andere Computer aktiv ist.

6. Überwachungssystem nach Anspruch 5, wobei der erste Thread einen Buchsencode verwendet.

7. Überwachungssystem nach Anspruch 4, das einen zweiten Thread umfasst, der eingerichtet ist, auf Verbindungsanforderungen von anderen Computern zu horchen.

8. Überwachungssystem nach Anspruch 7, wobei der zweite Thread Versuche sich mit dem Computer zu verbinden, auf dem der Thread von einem anderen Computer läuft und Akzeptanz besagter Verbindung überwacht, um **dadurch** dem Computer, auf dem der Thread läuft, anzuzeigen, dass der Computer, der versucht sich mit jenem Computer zu verbinden, aktiv ist.

9. Überwachungssystem nach Anspruch 5, das einen dritten Thread umfasst, der verwendbar ist zu selektieren, ob ein Computer als ein Server oder Client arbeitet.

10. Überwachungssystem nach Anspruch 9, wobei der erste Thread verwendet wird, zu identifizieren, ob ein kontaktierter Computer antwortet oder nicht, und setzt entsprechend einen Statusmerker und der dritte Thread verwendet den Statusmerker wenigstens teilweise als eine Basis zum Bestimmen, ob die Maschine, auf der er läuft, als ein Server oder Client fungieren soll.

11. Überwachungssystem nach Anspruch 10, wobei der dritte Thread eine Liste gegenwärtig aktiver Server und eine Aufzeichnung davon verwendet welche Maschine gegenwärtig als ein Server fungiert, um zu ermitteln, ob der Computer, auf dem der Thread läuft, jetzt ein Server werden sollte, falls der Computer, der gegenwärtig als ein Server läuft, als inaktiv angezeigt wird.

12. Überwachungssystem nach Anspruch 11, wobei, wenn der gegenwärtig laufende Server als inaktiv erachtet wird, aber ein weiterer Computer, der höher in der hierarchischen Liste von Computern ist, verfügbar wird, dann jener weitere Computer der Server wird.

13. Überwachungssystem nach Anspruch 1, wobei, wenn ein Computer zuerst ein Server wird, er Verbindungen zu den anderen Computern und Geräten auf dem Netzwerk öffnet und mit ihnen entsprechend ihrer spezifischen Protokolle zu kommunizieren beginnt.

14. Überwachungssystem nach einem der Ansprüche 1 bis 13, das in einem Gefängnis verwendet wird, wobei die Zustandsmelde- und Überwachungsgeräte Überwachungsvorrichtungen umfassen.

15. Überwachungssystem nach einem der Ansprüche 1 bis 13, das in einer Gefängnisumgebung verwendet wird, wobei das Zustandsmelde- und Überwachungsgerät Überwachungsvorrichtungen umfasst.

## Revendications

1. Système de surveillance comportant un réseau ayant au moins deux ordinateurs (A, B, C), et un ou plusieurs dispositifs de surveillance et / ou de détection de condition (7 - 16), les ordinateurs étant arrangés pour permettre à l'un quelconque des ordinateurs de tenir lieu de serveur à tout moment et à tous les autres ordinateurs de tenir lieu de clients et de devenir le serveur si le premier serveur devient incapable de tenir lieu de serveur ; pour permettre au serveur de se connecter par rapport auxdits un ou plusieurs dispositifs de surveillance et / ou de détection de condition et aux clients ; et pour permettre aux utilisateurs d'effectuer des actions sur les machines clients qui affectent lesdits un ou plusieurs dispositifs de surveillance et / ou de détection de condition, comme quoi les actions effectuées par les clients sont passées auxdits un ou plusieurs dispositifs de surveillance et / ou de détection de condition par le biais du serveur.

2. Système de surveillance selon la revendication 1, comprenant une liste hiérarchique de la priorité selon laquelle les ordinateurs peuvent devenir le serveur.

3. Système de surveillance selon la revendication 2, dans lequel la liste hiérarchique contient les adresses IP de chaque ordinateur.

4. Système de surveillance selon la revendication 1, dans lequel une priorité d'unités d'exécution sont exécutées sur chaque ordinateur, les unités d'exécution étant utilisées pour réaliser des états comme quoi un ordinateur tient lieu de serveur et les autres ordinateurs tiennent lieu de clients.

5. Système de surveillance selon la revendication 4, quand chaque ordinateur comprend une liste des adresses de chaque autre ordinateur et comportant une première unité d'exécution agissant pour vérifier si oui ou non chaque autre ordinateur est actif.

6. Système de surveillance selon la revendication 5, dans lequel la première unité d'exécution utilise un code d'interface de connexion.

7. Système de surveillance selon la revendication 4, comportant une deuxième unité d'exécution arrangée pour être en mode de réception des demandes de connexion en provenance d'autres ordinateurs.

8. Système de surveillance selon la revendication 7, dans lequel la deuxième unité d'exécution surveille des tentatives de connexion à l'ordinateur sur lequel l'unité d'exécution est exécutée en provenance d'un autre ordinateur et l'acceptation de ladite connexion, pour de ce fait indiquer à l'ordinateur sur lequel l'unité d'exécution est exécutée que l'ordinateur tentant de se connecter avec cet ordinateur est actif.

9. Système de surveillance selon la revendication 5, comportant une troisième unité d'exécution pouvant être utilisée pour sélectionner le fonctionnement d'un ordinateur en tant que serveur ou client.

10. Système de surveillance selon la revendication 9, dans lequel la première unité d'exécution est utilisée pour identifier si oui ou non un ordinateur contacté répond et définit un fanion d'état en conséquence et la troisième unité d'exécution utilise le fanion d'état au moins partiellement comme point de départ pour déterminer si oui ou non la machine sur laquelle elle est exécutée doit tenir lieu de serveur ou de client.

11. Système de surveillance selon la revendication 10, dans lequel la troisième unité d'exécution utilise une liste de serveurs actuellement actifs et un enregistrement de la machine qui tient actuellement lieu de serveur pour déterminer si oui ou non l'ordinateur sur lequel l'unité d'exécution est exécutée doit alors devenir un serveur si l'ordinateur tenant actuellement lieu de serveur est indiqué comme étant inactif.

12. Système de surveillance selon la revendication 11, dans lequel si le serveur actuellement en cours de fonctionnement est considéré comme étant actif mais qu'un autre ordinateur qui se situe plus haut dans la liste hiérarchique des ordinateurs devient disponible, alors cet autre ordinateur devient le serveur.

13. Système de surveillance selon la revendication 1, dans lequel quand un ordinateur devient tout d'abord un serveur il ouvre des connexions par rapport aux autres ordinateurs et dispositifs se trouvant sur le réseau et commence à communiquer avec eux en fonction de leurs protocoles spécifiques.

14. Système de surveillance selon l'une quelconque des revendications 1 à 13, servant dans une prison, les dispositifs de surveillance et de détection de condition comprenant des dispositifs de surveillance.

15. Système de surveillance selon l'une quelconque des revendications 1 à 13, servant dans un environnement de prison, le dispositif de surveillance et de détection de condition comprenant des dispositifs de surveillance.
